**Europäisches Patentamt**

**European Patent Office**

**Office européen des brevets**

(19)

(11) Veröffentlichungsnummer: **0 290 634**
**A1**

(12) # EUROPÄISCHE PATENTANMELDUNG

(21) Anmeldenummer: **87106753.4**

(22) Anmeldetag: **09.05.87**

(51) Int. Cl.⁴: **G05D 1/02**

(43) Veröffentlichungstag der Anmeldung:
**17.11.88 Patentblatt 88/46**

(84) Benannte Vertragsstaaten:
**AT BE CH DE ES FR GB GR IT LI LU NL SE**

(71) Anmelder: **CARL SCHENCK AG**
**Landwehrstrasse 55 Postfach 40 18**
**D-6100 Darmstadt(DE)**

(72) Erfinder: **Frohn, Heiko**
**Bommersheimer Weg 100**
**D-6380 Bad Homburg(DE)**
Erfinder: **Zielke, Thomas**
**Saalgasse 40**
**D-6200 Wiesbaden(DE)**

(74) Vertreter: **Dallhammer, Herbert, Dipl.-Ing.**
**CARL SCHENCK AG Patentabteilung**
**Postfach 4018 Landwehrstrasse 55**
**D-6100 Darmstadt(DE)**

(54) **Verfahren zum Führen eines ohne Fahrer frei beweglichen Fahrzeugs.**

(57) Bei einem Verfahren zum Führen von ohne Fahrer frei beweglichen Fahrzeugen auf einer Fahrbahn mittels am Fahrzeug vorhandener optischer Sensoren, die eine längs der Fahrbahn angeordnete unterbrochene Markierung aufnehmen und mit im Fahrzeug gespeicherten Führungsdaten vergleichen, wobei bei Abweichungen von den Führungsdaten Steuerbefehle zur Führungskorrektur abgeleitet werden, wird zum Zwecke, die Lage eines sich bewegenden führerlosen Fahrzeugs in einem vorgegebenen Kurs festzustellen und bei Kursabweichung eine überwachbare Fahrkorrektur durchzuführen, durch die Anordnung weiterer Informationsstreifen eine Fahrkorrektur ermöglicht.

Fig. 1

EP 0 290 634 A1

## Verfahren zum Führen eines ohne Fahrer frei beweglichen Fahrzeugs

Die Erfindung betrifft ein Verfahren zum Führen eines ohne Fahrer frei beweglichen Fahrzeugs auf einer Fahrbahn mittels am Fahrzeug vorhandener optischer Sensoren, die längs der Fahrbahn angeordnete, unterbrochene Markierungen abtasten und das Abtastergebnis mit im Fahrzeug gespeicherten Führungsdaten vergleichen, wobei bei Abweichung von den gespeicherten Führungsdaten Steuerbefehle zur Führungskorrektur abgeleitet werden.

Durch die US-PS 3 708 668 ist ein optisch geführtes Fahrzeug bekannt geworden, welches durch eine Mehrzahl fotoelektrischer Elemente geführt wird. Hierbei ist das zentrale fotoelektrische Element auf eine unterbrochene Führungslinie gerichtet. Bei Unterbrechung dieser Linie wird ein Signal erzeugt, welches als neues Signal zum einen gespeichert und zum andern mit einem bisherigen Signal verglichen wird. Durch Vergleich zwischen altem und neuem Signal wird ein Kontrollsignal erzeugt, welches die Position und die Geschwindigkeit des Fahrzeugs relativ zur unterbrochenen Linie herstellt. Hiermit ist es möglich, Steuersignale auf die Lenkeinrichtung des Fahrzeugs einwirken zu lassen, so daß das Fahrzeug selbst zu seinem vorgegebenen Kurs zur unterbrochenen Führungslinie zurückgeführt wird. Mit einer derartigen Einrichtung ist es jedoch nicht möglich, bei einem fahrerlosen Fahrzeug die zurückgelegte Wegstrecke seit seinem Start festzustellen und es ist auch nicht möglich, außer den Steuerinformationen andere Informationen mit Hilfe der unterbrochenen Markierungen den Speicher-und Recheneinrichtungen des Fahrzeugs zuzuführen.

Durch die DE-PS 33 32 615 ist ein optisch geführtes Fahrzeug mit einer am Fahrzeug angeordneten Kamera und mit einem auf dem Boden verlegten Führungsstreifen bekannt geworden. Zur Führung derartiger führerloser Fahrzeuge ist es erforderlich, reflektierende Führungsstreifen am Boden zu verlegen und zusätzlich Reflektoreinrichtungen am Fahrzeug vorzusehen, um Licht von einem näheren Bereich in die Kamera leiten zu können, ohne daß das von entfernteren Bereichen ankommende Licht behindert wird. Bei einer Verschmutzung der Reflektoren auf dem Boden wird die Steuerung des Fahrzeugs zumindest behindert, wenn nicht völlig ausgeschaltet. Darüber hinaus ist eine derartige optische Führungseinrichtung sehr aufwendig und zufolge der Anordnung der Fernsehkamera im oberen Teil des Fahrzeugs nicht geeignet, eine ständige Überwachung und Kontrolle des Fahrwegs des Fahrzeugs durchzuführen und zwar insbesondere dann nicht, wenn zu transportierende Fördergüter den Lichteinfall in die Fernsehkamera behindern. Der weiterhin dort offenbarte Balkencode stellt ein Ersatz für den Führungsstreifen als Führungselement dar. Auch hierbei wird bei einer Verschmutzung der vorsätzlich aufzubringenden reflektierenden Streifen als Balkencode eine sichere und genaue Führung des Fahrzeugs beeinträchtigt. Weiterhin ist durch die Anordnung der reflektierenden Streifen zwischen den Rädern des fahrerlosen Fahrzeugs eine zusätzliche Korrektur zwischen Fernsehkamera und reflektierenden Streifen nötig, wenn die Fernsehkamera nicht genau in der Mitte zwischen den Rädern am Dach des Fahrzeugs angeordnet ist. Findet eine derartige Korrektur nicht statt, sind insbesondere bei schmalen Förderwegen Unfälle unvermeidbar. Auch bei einer derartigen Anordnung ist es nicht möglich, in Abhängigkeit der unterbrochenen Markeirung weitere Informationen dem Fahrzeug zu übermitteln und in Video-Echt-Zeit eine Steuerung vorzunehmen.

Die deutsche Offenlegungsschrift 35 01 039 offenbart ein Verfahren zur Ermittlung einer Fahrstrecke zwischen einem Ausgangsort und einem Zielort in einem vermaschten Straßennetz, wobei die Kennzeichnung des Fahrzeugstandortes und damit auch des Ausgangsortes einer Fahrt einer die Kennzeichnung beinhaltenden Strichkodierung entnommen wird, die auf, in und/oder im Bereich der Fahrbahn angeordnet und von Fahrzeugsensoren abtastbar ist. Ein derartiges Verfahren bedarf zwingend eines Fahrers, der die Informationen in Bordrechner übergibt um daraus die kürzeste Fahrstrecke zu erhalen. Eine Orientierung des Fahrzeugs selbst zu einem Führungsstreifen ist hiermit nicht möglich, auch wenn die Strichkodierung anstelle ihres Verlaufs quer zur Fahrtrichtung, seitlich neben der Fahrbahn senkrecht oder in besonderen Fällen über den Fahrzeugen waagerecht angebracht werden. Ebenso sind die deutschen Offenlegungsschriften 35 01 034 und 35 01 033 nicht geeignet, eine Führung eines frei fahrenden, unbemannten Fahrzeugs zu übernehmen, da dort zwingend jeweils ein Fahrzeuglenker vorgeschrieben ist, dem beispielsweise bei auftretenden Störungen auf der Fahrbahn bei Reperaturarbeiten beispielsweise die günstigste Umleitung mittels dieses Verfahrens angeboten werden soll.

Ausgehend von dem zunächst genannten Stand der Technik liegt der Erfindung die Aufgabe zugrunde, die Lage eines sich bewegenden führerlosen Fahrzeugs in einem vorgegebenen Kurs feststellen und bei Kursabweichungen eine überwachbare, die zurückgelegte Strecke mitberücksichtigende Fahrkorrektur durchzuführen und mit Hilfe einer unterbrochenen Markierung aktiv neue Befehle dem Fahrzeug zu übermitteln. Diese Aufgabe wird durch die kennzeichnenden Merkmale des Anspruchs I gelöst. Durch das Erkennen des Endes einer Führungsmarkierung bei unverminderter Fahrt des Fahrzeugs wird erstmals in Video-Echt-Zeit eine Streckenmarkierung als Kontrolle den im Fahrzeug gespeicherten Werten übergeben, dort ein Vergleich mit den den Sollwerten durchgeführt, so daß anschließend sofort eine Ausrichtung des Fahrzeugs bei Berücksichtigung der zurückgelegten Strecke durchgeführt werden kann. Zufolge des sich im wesentlichen orthogonal zur Fahrrichtung erstreckenden Endes eines Markierungselementes erscheint ein eindeutiges Informationsmerkmal auch dann, wenn es sich bei den Markierungselementen um einfache Farbmarkierungen handelt, die als seitliche Wegbegrenzungen sowieso für die Förderstrecken der unbemannten Fahrzeuge vorgesehen werden. Es ist also keinesfalls eine zusätzliche Markierung erforderlich.

Die in Anspruch 2 unter Schutz gestellten Maßnahmen zeigen dem hier zuständigen Fachmann, wie er in Video-Echt-Zeit in Abhängigkeit eines Endes eines Markierungselementes an der Fahrbahn zusätzlich angebrachte Informationen vom Rechner und den Speichern des Fahrzeugs übernehmen lassen kann, die den weiteren Weg des Fahrzeugs beeinflussen. Beispielsweise können diese Informationen darin bestehen, daß das Fahrzeug an einer bestimmten nachfolgenden Stelle beladen oder entladen wird, daß kontrolliert wird, wie weit seine Energiereserven noch ausreichen und nach Feststellung der Energiereserve die Fahrt ohne weiteres bis zum Ende durchgeführt wird oder das Fahrzeug an eine Energiespeisestelle auf kürzestem Weg hingeführt wird. Auch kann zur Entlastung der im Fahrzeug befindlichen Speicher ein Teil des Streckennetzes in den zusätzlichen Informationen, beispielsweise eine folgende Kurve oder eine nachfolgende Kreuzung der Lenk-und Geschwindigkeitsautomatik im Fahrzeug zugeführt werden, so daß das Fahrzeug mit der zulässigen Geschwindigkeit in die Kurve einfährt oder sich der Kreuzung nähert. Zur Aufnahme dieser Informationen muß die Geschwindigkeit des Fahrzeugs jedoch nicht, wie bisher grundsätzlich üblich, verringert werden. Die in Anspruch 2 offenbarten Merkmale stellen eine besonders bevorzugte Ausgestaltung des Anspruchs I unter Schutz, zeigen aber auch für sich allein gesehen, eine weitere Lösung der der Erfindung zugrundeliegenden Aufgabe.

In noch weiterer Ausgestaltung des Erfindungsgegenstandes wird in Anspruch 3 der Verfahrensschritt die unterbrochenen Markierungselemente selbst als Null-Markierung für links und rechts hiervon angeordneter mehrerer Informationsstreifen zu benutzen.

In noch weiterer Ausgestaltung des erfinderischen Verfahrens werden gemäß Anspruch 4 in Abhängigkeit des Neigungswinkels des optischen Sensors zur Fahrbahn die Abstände zwischen den einzelnen Informationsträgern untereinander verändert, so daß beispielsweise bei einem in der Höhe des Fahrwerks angeordneten optischen Sensor, der einen sehr geringen Neigungswinkel zur Fahrbahn besitzt, auch noch der äußerste Informationsträger eindeutig als Träger erkannt wird und nicht durch Verzerrung oder Abbildung unterhalb der Auflösungsgrenze des optischen Sensors unerkennbar wird.

Die gemäß Anspruch 5 an einer Fahrbahn in Fahrtrichtung angebrachte, unterbrochene Markierung für ein fahrerloses Fahrzeug zeichnet sich dadurch aus, daß zur unterbrochenen Markierung weitere Informationsträger vorgegebener Länge angeordnet sind. Hierdurch ist mit den gespeicherten Werten ein Vergleich über Fahrweg (zurückgelegte Weglänge), Wegänderungen wie Kurve oder Kreuzung oder eine Stopstelle möglich. Auch kann an derartigen Stellen ein Fahrzeug, welches außer Kontrolle geraten war, durch Einstellen seiner Lenkung parallel zu den Markierungen und seines Wegzählers auf die vom Rechner vorgegebene Wegstrecke ohne zusätzli chen Aufwand wieder in den Förderfluß eingereiht werden.

Eine Ausgestaltung dieser Führungsmarkierung ist in Anspruch 6 unter Schutz gestellt, wobei die Informationsträger links und rechts der Führungsmarkierung angeordnet sind. Eine derartige Anordnung der parallelen Informationsträger ist dann von Vorteil, wenn in einem vorgegebenen Streckennetz mehrere Informationen über Geschwindigkeit, Ausrichtung zur Führungsmarkierung, Beladung des Fahrzeugs, auftretende Kreuzungen oder Vorfahrtsregelungen dem Fahrzeug über den optischen Sensor eingegeben werden, ohne daß dieser wegen Lesen der mehreren Informationen seine Geschwindigkeit verringern muß bzw. zum Stillstand kommt, um die einzelnen Vergleiche durchführen zu können und anschließend die Steuerbefehle ausführen kann, wie es beispielsweise bei quer zur Fahrbahn verlaufenden Markierungen oder Strichcodeanordnungen erforderlich ist.

Gemäß Anspruch 7 wird eine gleich beabstandete Anordnung von Informationsträgern und Führungsmarkierungen unter Schutz gestellt. Eine derartige Anordnung wird bevorzugt bei Ausführungen gewählt werden, bei denen wenige Informationsträger außer der Führungsmarkierung vorhanden sind und wobei der optische Sensor eine entsprechende Neigung zur Fahrbahn besitzt.

Die in Anspruch 8 unter Schutz gestellte Anordnung nimmt Rücksicht auf eine am Fahrzeug angeordnete optische Sensoranordnung, die nur um ein geringes Maß über der Fahrbahn angeordnet ist.

Die in Anspruch 9 unter Schutz gestellte Führungsmarkierung ist einsetzbar bei zusätzlichen, den Hintergrund optisch dehnender Einrichtungen.

Die in Anspruch 10 unter Schutz gestellte Führungsmarkierung stellt eine bevorzugte Längenerstreckung der Informationsträger in Bezug auf den einzelnen Abschnitt der Führungsmarkierung dar. Durch den erfinderischen Fluß der äußeren Informationen zum Speicher werden in einfachster Weise auch ein außer Kontrolle geratenes Fahrzeug durch den nächsten Informationsfluß gerichtet.

In Anspruch 11 wird eine besondere Ausgestaltung der Enden der Markierungselemente unter Schutz gestellt; in noch weiterer Ausgestaltung des Erfindungsgegenstandes wird ein bevorzugter Abstand zwischen den Markierungselementen unter Schutz gestellt, hierdurch wird es möglich, den Abstand zwischen zwei Markierungen in Abhängigkeit der geringsten Auswertezeit für die empfangenen Signale zu wählen.

Die Erfindung ist jedoch nicht beschränkt auf die auf der Fahrbahn angeordneten Informationsmarkierungen; sie umfaßt ebenso beispielsweise an Wänden oder an der Dekke in Fahrtrichtung verlaufende Führungsmarkierungen und parallel zu diesen verlaufende Informationsträger.

Durch das erfindungsgemäße Erkennen des Endes eines Markierungselementes durch den optischen Sensor ist ein nach diesem Verfahren arbeitendes Fördersystem mit unbemannten Fahrzeugen in der Lage, auch Fahrzeuge rückwärts fahren zu lassen, ohne daß ein Außerkontrollekommen dieser Fahrzeuge auftritt.

In der nachfolgenden Zeichnung wird an einer in Fahrtrichtung angebrachten unterbrochenen Führungsmarkierung einschließlich der hierzu parallelen Informationsträger in Verbindung mit einem fahrerlosen Fahrzeug die Erfindung näher erläutert.

Es zeigen:

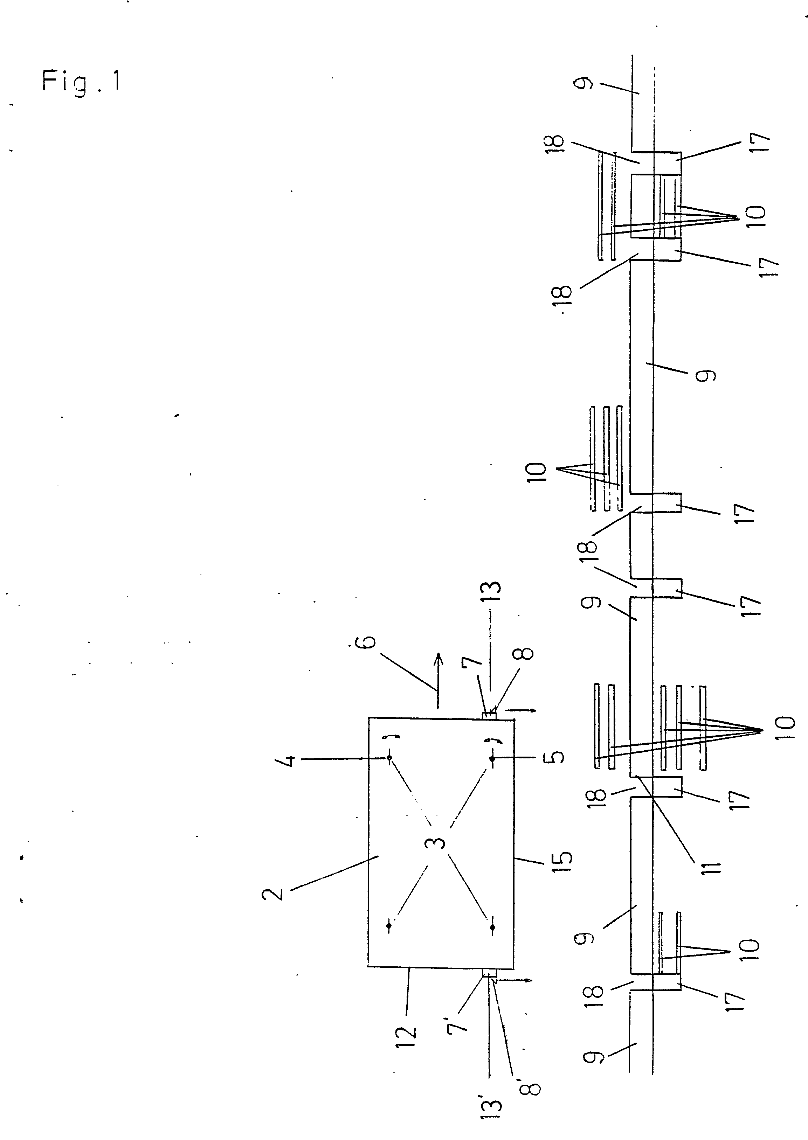

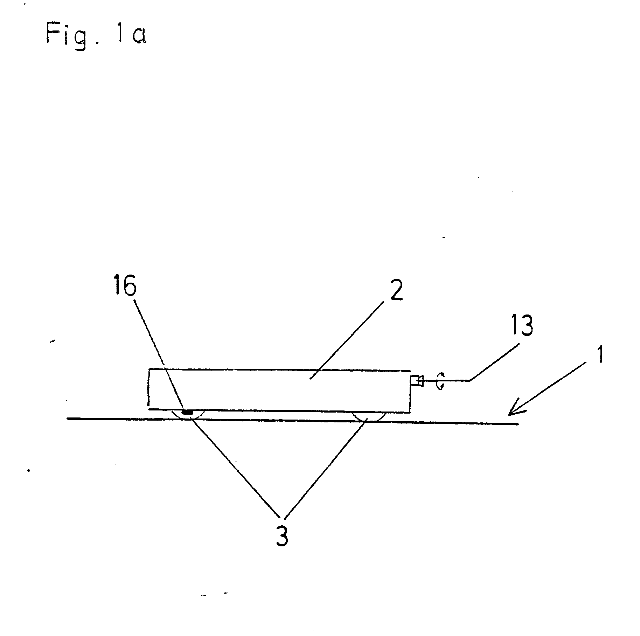

Fig. 1 in Draufsicht ein fahrerloses Fahrzeug, eine Führungsmarkierung sowie parallel zu dieser angeordnete Informationsträger und

Fig. 1a das fahrerlose Fahrzeug in Ansicht.

Gleiche Bauteile werden in den einzelnen Figuren mit denselben Bezugsziffern bezeichnet.

Gemäß Fig. 1 bewegt sich auf einer Fahrbahn 1 ein fahrerloses Fahrzeug 2 auf vier Rädern 3, von denen mindestens zwei Räder über Lenkzapfen 4, 5 im Sinne der in Fig. 1 angegebenen Doppelpfeile von einer nicht dargestellten Steuervorrichtung bewegt werden können.

Das fahrerlose Fahrzeug 2 bewegt sich im Ausführungsbeispiel von links nach rechts gemäß dem in Fig. 1 dargestellten Richtungspfeil 6. An der Vorderseite ist gemäß Ausführungsbeispiel ein optischer Sensor 7 angeordnet, der erfindungsgemäß über ein Prisma 8 eine unterbrochene unterbrochene Markierung 9 abtastet. Parallel zu dieser unterbrochenen Markierung 9 sind weitere Informationsträger 10 beispielsweise als Balkencodes angeordnet, deren Beginn jeweils mit dem Beginn 11 einer unterbrochenen Markierung 9 fluchten.

Befindet sich am fahrerlosen Fahrzeug 2 an dessen Rückseite 12 ein weiterer optischer Sensor 7' und ein weiteres Prisma 8', die genau wie der optische Sensor 7 und das Prisma 8 um eine Achse 13 schwenkbar sind, kann das Fahrzeug erfindungsgemäß jederzeit rückwärts gezielt fahren, wenn die Informationsträger 10 mit einem Ende 14 der unterbrochenen Markierung 9 fluchten.

Die im Ausführungsbeispiel dargestellte Anordnung der optischen Sensoren 7, 7' und der Prismen 8, 8' am vorderen und hinteren Ende des fahrerlosen Fahrzeugs 2 sind nicht zwingend erforderlich. Es können die optischen Sensoren beispielsweise auch an einer Seitenfläche 15 des fahrerlosen Fahrzeugs 2 angeordnet sein. Hiermit ergibt sich erfindungsgemäß ohne jede Umlenkung des vom Informationsträger ausgehenden Lichts eine Erkennung des Informationsträgers beispielsweise durch eine Videokamera als optischer Sensor. In diesem Falle ist die Videokamera selbst auf einer Schwenkachse angeordnet. Der weitere Vorteil einer Seitenanordnung besteht darin, daß der optische Sensor in die Seitenfläche 15 integriert sein kann und insoweit bei voller Beobachtungsmöglichkeit keiner Gefahr einer Beschädigung durch Hindernisse ausgesetzt ist.

Werden die zusätzlichen Informationsträger 10 als Strichcode aufgebaut, so stellt jede unterbrochene Markierung 9 für das fahrerlose Fahrzeug 2 eine Informationsquelle dar. Beispielsweise kann der Zwei-Balkencode Auskunft über die absolute Wegstrecke geben, die das Fahrzeug seit seinem Start zurückgelegt haben sollte. Stimmt dieser Wert nunmehr nicht überein, mit einem am Rad 3 erfindungsgemäß angeordneten Zähler 16 (vgl. Fig. 1a) so wird durch diesen Code über den optischen Sensor eine Korrektur des Zählers 16 vorgenommen, so daß von hier aus wieder eine korrekte Kontrollzählung durchgeführt werden kann. Die Änderung zwischen der vorgegebenen Wegstrecke und der zurückgelegten Wegstrecke kann durch Lenkbewegungen hervorgerufen worden sein, die beispielsweise durch den mit der nächsten unterbrochenen Markierung 9 zusammenarbeitenden Balkencodeanordnung bewirkt wird, die zuständig ist für die parallele Ausrichtung des fahrerlosen Fahrzeugs 2 zur unterbrochenen Markierung 9. Steht hierbei das Fahrzeug schräg zur unterbrochenen Markierung 9, was der optische Sensor 7, 7' durch die Anordnung des Codes erkennen kann, werden Steuerbefehle an die Lenkzapfen 4, 5 weitergegeben, so daß das Fahrzeug im Bereich des Abschnitts der unterbrochenen Markierung 9 parallel zur unterbrochenen Markierung 9 ausgerichtet wird. Bei der nächsten Codeanordnung kann es sich beispielsweise um den Hinweis einer nun folgenden Kreuzung mit Vorfahrtsregelung handeln.

In der Fig. I ist darüber hinaus auch eine Spreizung einzelner zum Code gehörender Informationsträger dargestellt, mit der erreicht wird, daß bei tiefliegendem optischen Sensor und so mit flachem Neigungswinkel die Abstände der einzelnen Informationsträger in der Abbildung näherungsweise konstant sind und damit bei vorgegebener Auflösugn des optischen Sensors die mögliche Informationsdichte maximiert wird.

Die einzelnen Abschnitte der unterbrochenen Markierung 9 sind durch quer zur Fahrtrichtung angeordnete Streifen I7 so voneinander getrennt, daß der optische Sensor 7 bzw. 7' auch bei Fahrt eindeutig Unterbrechungen I8 zwischen den einzelnen unterbrochenen Markierungen 9 in Echtzeit erkennen kann. Erkennt der optische Sensor bei Vor-oder Rückwärtsfahrt eine derartige Unterbrechung I8, wird er sensibilisiert und kann anschließend bei unveränderter Geschwindigkeit in Echtzeit die parallel zu den unterbrochenen Markierungen 9 angeordneten Informationsstreifen I0 erkennen und auswerten.

Damit ist ein Leit-und Führungssystem für ein fahrerloses Fahrzeug 2 geschaffen, welches in Video-Echt-Zeit ständig das Fahrzeug überwachen und leiten kann; d. h. das Fahrzeug wird in Abhängigkeit der Video-Bildfolge geleitet und überwacht. Der besondere Vorteil besteht darin, daß beim Abtasten von Informationen keine Verringerung der Geschwindigkeit des Fahrzeugs durchgeführt werden muß und daß die Fahrzeuge bei entsprechender Ausgestaltung mit Sensoren am vorderen und hinteren Ende des Fahrzeugs ohne Wenden auf der Fahrstrecke vorund rückwärts fahren können.

## Ansprüche

I. Verfahren zum Führen eines ohne Fahrer frei beweglichen Fahrzeugs (2) auf einer Fahrbahn (I) mittels am Fahrzeug (2) vorhandener optischer Sensoren (7), die längs der Fahrbahn neben dem Fahrzeug angeordnete unterbrochene Markierungen (9) abtasten und das Abtastergebnis mit im Fahrzeug (2) gespeicherten Führungsdaten vergleichen, wobei bei Abweichung von den gespeicherten Führungsdaten Steuerbefehle zur Führungskorrektur abgeleitet werden, dadurch gekennzeichnet, daß mindestens ein Sensor (7) während unverminderter Fahrt des Fahrzeugs (2) das Erscheinen eines Endes (17) eines Markierungselements (9) erkennt, daß abhängig von dieser Information die Lage des Fahrzeugs zum Ende dieses Elements in Bezug auf seine Richtung und seine bisher zurückgelegte Wegstrecke mit den gespeicherten Sollwerten verglichen wird und bei Nichtübereinstimmung Steuerbefehle an Fahrzeuglenkung und mindestens einen Wegstreckenzähler zur Korrektur der Ist-Werte weitergegeben werden.

2. Verfahren insbesondere nach Anspruch I, dadurch gekennzeichnet, daß von mindestens einem weiteren zum Ende eines Markierungselementes orientierten, parallel zu den unterbrochenen Markierungselementen verlaufenden Informationsträger während der unverminderten Fahrt abgetastete Informationen über den mindestens einen Sensor (7) in einen Fahrzeugspeicher eingespeichert werden, daß diese gespeicherten Werte zusätzliche Steuerbefehle an die Lenkung un den Bewegungsmechanismus des Fahrzeugs weitergeben und daß der mindestens eine Sensor das Ende des mindestens einen weiteren Informationsträgers erkennt.

3. Verfahren nach Anspruch I oder Anspruch 2, dadurch gekennzeichnet, daß bei der Zählung mehrerer parallel zum Markierungselement angeordneter Informationsträger (I0) die Markierungselemente als Null-Wert in die Zählung eingehen.

4. Verfahren nach Anspruch I oder Anspruch 2, dadurch gekennzeichnet, daß in Abhängigkeit des Neigungswinkels des optischen Sensors zur Fahrbahn (I) die Abstände der nebeneinander und parallel zur unterbrochene Markierung (9) verlaufenden Informationsträger (I0) ausgehend vom Abstand der ersten beiden Informationsträger (I0) zunehmen oder abnehmen.

5. An einer Fahrbahn (I) in Fahrtrichtung (6) angebrachte, unterbrochene Markierung (9) für ein fahrerloses Fahrzeug (2), dadurch gekennzeichnet, daß parallel zur unterbrochenen Markierung (9) weitere Informationsträger (I0) vorgegebener Länge angeordnet sind.

6. Unterbrochene Markierung nach Anspruch 4, dadurch gekennzeichnet, daß die weiteren parallelen Informationsträger (I0) links und rechts der unterbrochenen Markierung (9) angeordnet sind.

7. Führungsanordnung nach Anspruch 4 oder 5, dadurch gekennzeichnet, daß die Abstände zwischen den Informationsträgern (I0) einschließlich der unterbrochene Markierung (9) gleich sind.

8. Unterbrochene Markierung nach Anspruch 4 oder 5, dadurch gekennzeichnet, daß die Abstände zwischen den Informationsträgern (I0) einschließlich der unterbrochenen Markierung (9) mit zunehmender seitlicher Entfernung vom Fahrzeug (2) zunehmen.

9. Unterbrochene Markierung nach Anspruch 4 oder 5, dadurch gekennzeichnet, daß die Abstände zwischen den Informationsträgern (I0) einschließlich unterbrochener Markierung (9) mit zunehmender seitlicher Entfernung vom Fahrzeug (2) abnehmen.

l0. Unterbrochene Markierung nach einem der vorhergehenden Ansprüche, dadurch gekennzeichnet, daß die Länge der Informationsträger (l0) nicht größer als der einzelne Abschnitt (9) der unterbrochenen Markierung ist.

ll. Unterbrochene Markierung nach einem der vorhergehenden Ansprüche, dadurch gekennzeichnet, daß die einzelnen Abschnitte (9) der unterbrochenen Markierung durch senkrecht zu diesen angeordnete Streifen (l7) unterbrochen sind und daß die Streifen (l7) vom Fahrzeug (2) aus gesehen an der Aussenkante der Abschnitte (9) anschließen.

Fig.1

Fig. 1a

| | Europäisches Patentamt | EUROPÄISCHER RECHERCHENBERICHT | Nummer der Anmeldung |
|---|---|---|---|
| | | | EP 87 10 6753 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 143 969 (MANNESMANN) * Seite 1, Zeilen 13-76; Seite 1, Zeile 99 - Seite 2, Zeile 2, 44-119; Seite 3, Zeilen 47-76; Ansprüche 1, 3, 4, 7-9, 16, 17, 27-29, 31, 37, 42; Figuren 1, 2 * | 1 | G 05 D 1/02 |
| Y | DE-A-3 150 206 (ZENTRALES FORSCHUNGSINSTITUT DES VERKEHRSWESENS, DDR) * Seite 5, Zeile 1 - Seite 6, Zeile 14; Seite 7, Zeilen 8-18; Anspruch 5; Figur 1 * | 1 | |
| D,A | FR-A-2 535 068 (NIPPON YUSOKI) * Zusammenfassung; Seite 4, Zeilen 1-29, Seite 5, Zeile 33 - Seite 6, Zeile 9; Seite 6, Zeile 35 - Seite 6, Zeile 16; Seite 11, Zeilen 24-37; Seite 13, Zeilen 1-13; Seite 14, Zeile 33 - Seite 15, Zeile 19; Figuren 1, 2, 4, 8, 9, 12, 13 * | 1,2,11 | RECHERCHIERTE SACHGEBIETE (Int. Cl.4) |
| A | IBM TECHNICAL DISCLOSURE BULLETIN, Band 27, Nr. 4A, Seiten 2037-2040, September 1984, New York, US; SHUMATE et al.: "Routing and tracking of automatically guided vehicle" * Seiten 2037-2038, Absatz 1; Figuren 1, 2 * -/- | 1 | G 05 D |

Der vorliegende Recherchenbericht wurde für alle Patentansprüche erstellt

| Recherchenort | Abschlußdatum der Recherche | Prüfer |
|---|---|---|
| BERLIN | 03-12-1987 | BEITNER M.J.J.B. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches Patentamt

Nummer der Anmeldung

EP 87 10 6753

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 195 191 (INVENTIO AG) * Zusammenfassung; Seite 4, Zeile 7 - Seite 5, Zeile 12; Seite 8, Zeile 9 - Seite 10, Zeile 5; Seite 13, Zeile 18 - Seite 14, Zeile 17; Seite 23, Zeilen 10-25; Seite 24, Zeile 18 - Seite 25, Zeile 20; Ansprüche 9-11, 13; Figuren 1, 4 * --- | 2,3,10 | |
| A | PATENT ABSTRACTS OF JAPAN, Band 8, Nr. 204 (P-301) [1641], 18. September 1984; & JP - A - 59 90109 (HIRATA) 24.05.1984 --- | 1 | |
| A | PATENT ABSTRACTS OF JAPAN, Band 10, Nr. 177 (P-470)[2233], 21. Juni 1986; & JP - A - 61 25220 (DAIFUKU) 04.02.1986 --- | 5 | |
| A | PATENT ABSTRACTS OF JAPAN, Band 10, Nr. 288 (P-502)[2344], 30. September 1986; JP - A - 61 105 620 (DAIFUKU) 23.05.1986 ------ | 5,6 | |

**RECHERCHIERTE SACHGEBIETE (Int. Cl.4)**

Der vorliegende Recherchenbericht wurde für alle Patentansprüche erstellt

| Recherchenort | Abschlußdatum der Recherche | Prüfer |
|---|---|---|
| BERLIN | 03-12-1987 | BEITNER M.J.J.B. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
....................................................................
& : Mitglied der gleichen Patentfamilie, übereinstimmendes Dokument

EPO FORM 1503 03.82 (P0403)